# EUROPEAN PATENT SPECIFICATION

(11) **EP 1 865 240 B1**
(45) Date of publication and mention of the grant of the patent: **18.03.2009**
(21) Application number: 06380158.3
(22) Date of filing: 09.06.2006
(51) Int. Cl.: F16K 31/04, F16K 27/06, F16K 27/02

(54) **Zone valve with an actuator coupling device**
Zonenventil mit Anschlußeinrichtung für eine Betätigungseinrichtung
Soupape de zone avec un dispositif de couplage pour actionneur

(43) Date of publication of application: 12.12.2007
(73) Proprietor: ORKLI, S. COOP., 20240 Ordizia (Gipuzkoa) (ES)
(72) Inventor: Garcia Manso, Joaquin, 20009 Donosti Gipuzkoa (ES); Aimar, Arin Gutiérrez, 20240 Ordizia Gipuzkoa (ES); Pérez Gereñu, Juan Mari, 20240 Ordizia Gipuzkoa (ES)
(74) Representative: Igartua, Ismael

(56) References cited:
- EP-A2- 1 418 373
- WO-A-99/24745
- DE-U1- 20 217 989
- US-A- 5 540 414
- US-B2- 6 874 756

## Description

The present invention relates to a motor-operated zone valve for a hydronic heating or cooling system, comprising a two or three-way valve body with a plug member operated by means of a power actuator, which is provided with moulded plastic elements for its coupling to the valve body and its manual removal for the replacement or re-orientation of the actuator, which also comprise some parts of the integral moulded drive mechanisms.

### Prior art

An example of a zone valve whose motor-operated actuator is removable from the valve body is that described in publication US-A-5540414. The actuator of the known valve is covered by housing on a support base of the actuator with the motor and drive mechanisms, which is fitted on a three-way water valve body. The rotary valve spindle linked to the plug member of the ball type of similar is coupled to the actuator in its housing, issuing from a coupling platform screwed on the valve body. In the known zone valve the actuator coupling device comprises a pair of bowed spring leaves, protruding on opposite sides of the actuator and provided with a curved retaining end, which hooks on a respective edge of the body platform. The detachment and removal of the actuator for replacement is done by hand without the use of tools, but it has the drawback of several operations being required, the first being to grasp both retaining spring leaves, then exerting individual force on each spring leaf to release it from a retaining piece in the valve body, and lastly pulling the actuator housing up.

In US-B2-6874756 an example of the coupling of a valve actuator to the body of a valve is disclosed, using a number of snap connection spring tabs, which extend downwards from the actuator and are provided with a heel or retaining lip at the end, which is inserted in a corresponding groove in the valve body. The motor actuator comprises a moulded plastic base forming part of the actuator housing, with said built-in snap connection tabs.

WO 99/24745 A discloses an example of an interchangeable valve actuator which can be used with different valves when the valve body includes a specific engagement structure.

### Disclosure of the invention

The object of the present invention is a zone valve with a motor-operated actuator coupled to a two or three-way water valve with a valve spindle, provided with a device for coupling the actuator to the valve, including a coupling base plate as a part of the actuator executed by means of plastic moulding, and retaining integral means in said base plate for securing the actuator on the valve body.

Said integral means for securing the actuator take the form of spring retaining tabs extending downwards from two opposing peripheral edges of the support base, and a platform of the body is provided with the respective engagement grooves wherein the ends of the retaining tabs are hooked. Thus, for its replacement or re-orientation the actuator is removed from the body in a single manual operation in which the user grasps the actuator housing and pulls it, while at the same time pressing down the spring retaining tabs with his hand. To disengage the actuator and remove it from the valve body, it is not necessary to observe the retaining members beforehand in order to grasp them or activate any other release member for removal purposes.
Furthermore, the spring retaining means for the coupling are moulded into the actuator base plate, which also includes other built-in moulded support elements for the actuator mechanisms. The coupling device comprises a valve body platform from which protrudes the spindle of the plug member, which is also a plastic moulding provided with openings for the engagement of the retaining tabs by means of a snap-in connection easy for being released. The body platform, having said engagement openings symmetrical in relation to a tubular spindle guide, permits the re-orientation of the plug member as a normally closed or normally open valve.

### Description of the drawings

FIG. 1 is a perspective view of a zone valve according to the invention, showing the parts of the valve in their pre-installation position, including a device for coupling the actuator to the valve body.
FIG.2 is an elevational view of the zone valve of figure 1, with the partly sectioned actuator.
FIG. 3 is a view of the actuator coupling base plate of FIG. 1.
FIG. 4 is a view of the actuator-coupling bracket of FIG. 1.
FIG. 5 is a view of the coupling platform on the valve of FIG. 1.

### Detailed description of the preferred embodiment

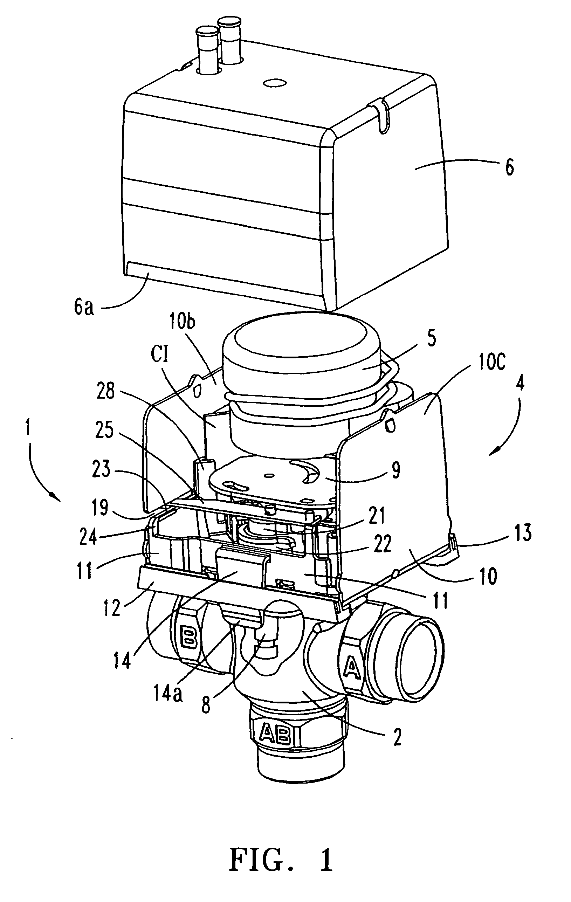

With reference to FIG. 1-5, an embodiment of a zone valve 1 according to the present invention comprises a three-way A, B, AB water valve body 2 with a valve spindle 8 and a rotary plug member 3 of the clappet or ball type, an actuator 4 provided with a motor 5 connected to a valve spindle 8 in an external housing 6,10 being mounted on the valve body 2 by means of an intermediate support platform 12 and a device 10-12 for coupling the actuator 4. The actuator can be removed from the body by hand, by pulling on its external housing 6,10 which is composed of a mounting bracket preferably made of metal plate in a U-shape and a housing 6 made of plastic and engaged on said intermediate support platform 12.

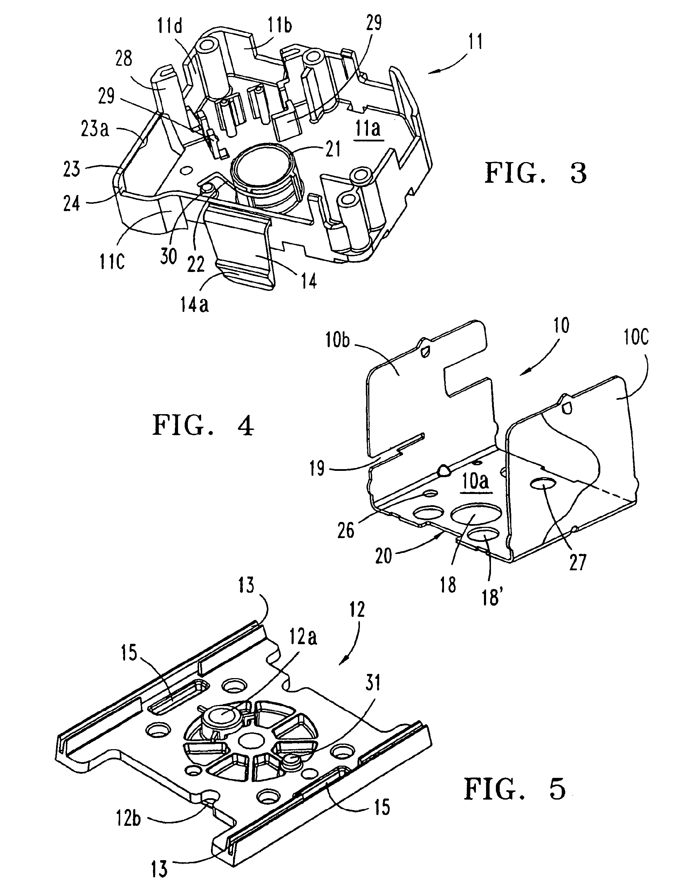

The coupling device 10-12 between the actuator 4 and the valve body comprises said support platform 12 (FIG.3) screwed to the valve body, above which are installed the actuator 4, said metal plate mounting bracket 10 provided with a horizontal bottom wall 10a and two side walls 10b, 10c, and a substantially square-shaped base plate 11 of moulded plastic, fixed on said base wall 10a of the housing. The base plate 11 is composed of the support for the motor 3 and mechanisms 9 for transmitting rotation to the valve spindle 8 and of the electrical motor drive components "CI". The base plate 11 is mounted in the actuator 4 between the two side walls 10a, 10b of the metal mounting bracket.

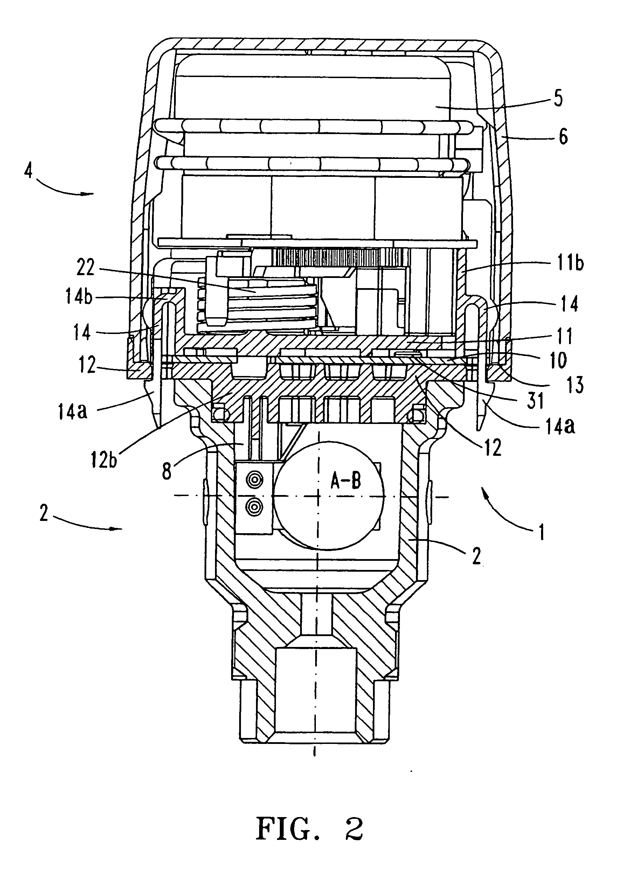

The support platform 12 (FIG. 5) is anchored on the valve body by means of an annular protuberance 12b extending below the flat plate and engaged in a circular cavity in the valve body 2. The support platform 12 is traversed by the end of the valve spindle 8, guided by a tubular part 12a in the support platform. The cover 6 (FIG. 2) of a box-type housing encloses the actuator 4 from above, fitted on the intermediate platform 12, for which the platform 12 adopts the form of a rectangular flat plate and in two opposing sides has two lips transverse to the mounting bracket 10, each provided with a respective channel 13 for the loose engagement of two peripheral edges 6a of the cover. In addition, it has a lug 31 for guiding the relative position of the mounting bracket 10.

The mounting bracket 10 (FIG.4) comprises said bottom wall 10a with a through-hole 18 for the tubular guide 12a in the support platform and the spindle 8 towards the motor, and other holes 18' for assemblage with the base plate 11. One of the side walls 10b of the mounting bracket is provided with a through window 19 for the valve manual opening lever 25, as is known in the prior art, in a horizontal extended elongated form with a stepped opening area at one end for retaining the lever 25. Said bottom wall is provided with a hole for guiding the base plate on the mounting bracket 10 and a second hole 27 for its guiding onto the support platform 12 lug 31. A respective rectangular opening 20 is cut in two opposing edges of the bottom wall 10a to act as a guide for a retaining tab 14 in the base plate 11.

The base plate 11 (FIG. 3) is quadrangular box-shaped for housing the rotation transmission mechanisms 9 and the mechanical and electrical "CI" means 22,25 for the electrical operation of the actuator 4. The base plate 11 comprises a support base 11a from the sides of which there extends a respective vertical wall 11b-11d of different configuration from each other. The support base 11a incorporates an integrated tubular guide 21 extending upwards - in the direction of the motor - for the passage of spindle 8 and the tubular guide 12a in the support platform. This tubular guide 21 also forms a guide support for a torsion spring 22 for the motor return 5. The base plate 11 incorporates two integrated retaining tabs 14 extending downwards, from two opposing vertical walls outside the base plate.

The retaining tabs 14 are conformed for elastic deformation when pressed with one hand towards the centre of the base plate. Each retaining tab 14 is provided at its end with a retaining hook 14a, which is engaged in a corresponding groove 15 in the platform 12. Thus, the actuator is fixed to the valve body 2 in a removable fashion. The two tabs 14 are depressed at the same time by means of a manual operation, and with one hand the actuator is pulled up to release the retaining hooks 14a from said grooves 15 in the body platform 12. The elastic force of the retaining tabs 14 due to their deformation when flexed is regulated by a curved portion 14b in their intersection with the vertical wall 11b,11c of the support base plate 11. The pivoting travel of the retaining tabs 14 when they are depressed is a stop in said rectangular openings in the opposite edges of the mounting bracket 10 (FIG. 2 and FIG. 4).

The moulded plastic base plate 11also incorporates (FIG. 3) a spring pull 23 shaped like a strip and made of plastic integral with a vertical side wall 11d. The strip spring 23 overhangs horizontally between two posts 24 also integral with the side wall 11d, and it is situated facing said lever through window 19 in the mounting bracket 10. The manual lever 25 is situated above the spring pull 23, being pushed up by the reaction of the strip-spring 23 when the lever is raised by the user in order to release the motor, in the stepped area of the window 19. Also mounted on the support base plate are the printed circuit board CI, engaged vertically between two guide grooves 28 and a micro-switch (not represented in drawings), between two vertical walls 29. A lug 30 adjacent to the guide tube 21 for the valve spindle 8 acts as a retaining stop for the return spring 22.

## Claims

1. A zone valve with a coupling device (10-12) adaptable to an hydronic system having an actuator (4) with a motor (5) for the rotation of a valve spindle (8), said actuator (4) being coupled in removable fashion on a body (2) of a two or three-way valve, through an intermediate support platform (12) which guides the valve spindle (8) for its rotation, wherein the actuator (4) includes a housing (6) built by means of a mounting bracket (10) supported on said platform (12) and a substantially cube-shaped actuator cover (6), the mounting bracket (10) being provided with a vertical wall (10b) having a window slot (19) cut with a stepped outline for guiding a motor (5) manual release lever (25), a base plate (11) for supporting the motor (5) and a drive mechanisms (9,21-25), including a torsion spring (22) for returning the valve spindle (8) to its idle position, the electrical circuit (CI) for operating the motor (5) and elastic retaining means (14,15) on the actuator (4), for its anchoring on the valve body support platform (12), **characterised in that**, said base plate (11) is built by plastic execution moulding, substantially square-shaped and fixed on the mounting bracket (10), and it comprises a support base (11a) from each of the sides of which there extends a respective vertical wall (11b-11d), wherein the support base (11a) incorporates by means of integrated moulding a tubular guide (21) extending upwards for the passage of the valve spindle (8) and at the same time for the support of the torsion spring (22), an elastic element (23) interacting with said locking lever (25), and two retaining spring tabs (14) for the actuator (4) extending downwards from opposite sides, which engage in a respective matching groove (15) in the support platform, wherein said retaining tabs (14) are inserted by means of a snap-in connection, while the valve spindle (8) is coupled to said transmission drive mechanisms (9,21-25).

2. A zone valve with a coupling device (10-12) according to claim 1, wherein said retaining tabs (14) are extended outside the outline of the base plate (11) starting from two of its vertical walls (11b,11c) with a curved portion (14b) by which the retaining tabs (14) provide an elastic retaining force after their deformation, and the mounting bracket (10) has a cut-opening (20) in two opposing edges which forms a stop for the pivoting travel each retaining tab (14) when these are pressed towards the centre of the actuator (4), for the removal of the actuator (4).

3. A zone valve with a coupling device (10-12) according to claim 1, wherein said support base (11) comprises a strip-spring (23) made from the same plastic integral with one of said vertical walls (11d), the strip-spring (23) is situated facing said window slot (19) in the mounting bracket (10) and extends horizontally in a flexible fashion in said vertical wall (11d) in contact with the locking lever (25), so that the latter is kept pressed up by the reaction of the strip-spring (23).

4. A zone valve with a coupling device (10-12) according to claim 1, wherein said support base (11) on a substantially flat support plate at the bottom (11a) also has two built-in guide grooves (28) for inserting an electrical circuit board (CI), two vertical walls (29) forming a housing for a micro-switch, and a lug (30) acting as the retaining stop for the return spring (22), adjacent to said tubular guide (21) for the valve spindle (8).

5. A zone valve with a coupling device (10-12) according to claim 1, wherein said support platform (12) fixed to the valve body (2) is a plastic moulding and in two opposing sides it has a respective raised edge (13) transverse to the mounting bracket (10), with a channel (13) for the engagement from above of two peripheral edges peripheral lips (6a) of the housing cover, and two rectangular openings (15) in the other two sides for the passage of the retaining tabs (14).

## Patentansprüche

1. Ein Bereichsventil mit einer Anschlussverbindung (10-12), das an eine Warmwasseranlage angepasst werden kann und mit einem Stellglied (4) mit einem Motor (5) zum Drehen der Ventilspindel (8) ausgestattet ist, wobei das Stellglied (4) abnehmbar befestigt ist an einem Gehäuse (2) eines Zwei- oder Dreiwegventils, über eine zwischengelagerte Halteplattform (12), die die Ventilspindel (8) bei der Drehung führt, wobei das Stellglied (4) ein Gehäuse (6) umfasst, welches aus einem Montagewinkel (10) besteht, der auf der Plattform (12) gestützt ist, und einer im Wesentlichen würfelförmigen Stellgliedabdeckung (6), wobei der Montagewinkel (10) mit einer senkrechten Wand (10b) mit einem Fensterschlitz (19) versehen ist, das mit einem stufenförmigen Umriss geschnitten ist, zum Führen eines manuellen Freigabehebels (25) für den Motor (5), sowie mit einer Grundplatte (11) als Halterung für den Motor (5) und Antriebsmechanismen (9,21-25), einschließlich einer Drehstabfeder (22) zur Rückführung der Ventilspindel (8) in ihre Ausgangsposition, des Stromkreislaufs (Cl) für den Betrieb des Motors (5) und einer elastischen Verriegelung (14,15) am Stellglied (4) für dessen Verankerung auf der Ventilgehäusehalteplattform (12), **dadurch gekennzeichnet, dass** die Sockelplatte (11) mittels Kunststoffpressung gefertigt, im Wesentlichen quadratisch und auf dem Montagewinkel (10) befestigt ist, und eine Halteplatte (11a) an jeder Seite umfasst, von der aus sich die jeweilige senkrechte Wand (11b-11d) erstreckt, wobei die Halteplatte (11a) über integriertes Formpressen eine rohrförmige Führung (21) beinhaltet, die sich entlang des Durchbruchs der Ventilspindel (8) nach oben erstreckt und gleichzeitig die Halterung für die Drehstabfeder (22) darstellt, neben einem elastischen Element (23), das mit der Hebelarretierung (25) zusammen wirkt, und zwei Haltefederlaschen (14) für das Stellglied (4), die sich von den gegenüber liegenden Seiten nach unten erstrecken und sich in den jeweils passenden Rillen (15) in der Halteplattform einrasten, wobei die Haltelaschen (14) mittels einer Einschnappverbindung eingeführt werden, während die Ventilspindel (8) mit den Antriebsmechanismen der Übertragung (9,21-25) verbunden wird.

2. Ein Bereichsventil mit einer Anschlussverbindung (10-12) gemäß Anspruch 1, wobei sich die Haltelaschen (14) außerhalb der Kontur der Sockelplatte (11) erstrecken und von zwei der senkrechten Wände (11b,11c) ausgehen, mit einem gebogenen Abschnitt (14b), über den die Haltelaschen (14) eine elastische Haltekraft nach ihrer Verformung erzeugen, und der Montagewinkel (10) eine ausgeschnittene Öffnung (20) an zwei gegenüberliegenden Rändern besitzt, die einen Anschlag für die Drehbewegung einer jeden Lasche (14) darstellen, wenn diese zur Mitte des Stellglieds (4) hin gedrückt werden, um das Stellglied (4) zu entfernen.

3. Ein Bereichsventil mit einer Anschlussverbindung (10-12) gemäß Anspruch 1, wobei die Halteplatte (11) eine Bandfeder (23) umfasst, als Bestandteil des gleichen Kunststoffteils einer der senkrechten Wände (11d), wobei die Bandfeder (23) zum Fensterschlitz (19) im Montagewinkel (10) hin zeigt und sich horizontal flexibel über die senkrechte Wand (11 d) in Berührung mit der Hebelarretierung (25) erstreckt, so dass letztere durch die Wirkung der Bandfeder (23) nach oben gedrückt bleibt.

4. Ein Bereichsventil mit einer Anschlussverbindung (10-12) gemäß Anspruch 1, wobei die Halteplatte (11) auf einer im Wesentlichen flachen Trageplatte unten (11a) ebenso zwei integrierte Führungsrillen (28), um eine Stromkreislaufkarte (Cl) einzustecken, zwei senkrechten Wände (29), die ein Gehäuse für einen Mirkoschalter bilden, und eine Öse (30), die als Rückhalteanschlag für die Rückholfeder (22) fungiert, neben der rohrförmigen Führung (21) für die Ventilspindel (8) besitzt.

5. Ein Bereichsventil mit einer Anschlussverbindung (10-12) gemäß Anspruch 1, wobei die am Ventilgehäuse (2) befestigte Halteplattform (12) ein Kunststoffpressteil ist und an zwei gegenüber liegenden Seiten jeweils angehobene Ränder (13) quer zum Montagewinkel (10) besitzt, mit einem Kanal (13) zum Einsetzen von oben her von zwei peripheren Lippenrändern (6a) für die Gehäuseabdeckung und zwei rechteckige Öffnungen (15) an den anderen beiden Seiten des Durchbruchs der Haltelaschen (14).

## Revendications

1. Une vanne de secteur avec coupleur (10-12) adaptable à un caloporteur doté d'un mécanisme de commande (4) avec un moteur (5) pour la rotation d'une tige soupape (8), ledit mécanisme de commande (4) couplé de manière à être amovible au corps (2) d'une soupape à deux voies ou d'une soupape à trois voies, à travers une plate-forme de soutien intermédiaire (12) qui oriente la rotation de la tige de soupape (8), où le mécanisme de commande (4) inclut une enceinte (6) conçue au moyen d'un support de fixation (10) qui repose sur ladite plate-forme (12) et un couvercle de mécanisme de commande de forme sensiblement cubique (6), le support de fixation (10) étant doté d'une paroi verticale (10b) présentant une fente de fenêtre (19) coupée de manière étagée pour guider un (5) levier à desserrage manuel motorisé (25), une plaque de base (11) pour supporter le moteur (5) et un mécanisme d'entraînement (9,21-25), y compris un ressort à torsion (22) pour remettre la tige de soupape (8) dans sa position de repos, le circuit électrique (Cl) pour faire fonctionner le moteur (5) et les dispositifs de retenue en élastique (14,15) sur le mécanisme de commande (4), pour permettre son ancrage dans la plate-forme de soutien du corps de soupape (12), **caractérisé en ce que**, ladite plaque de base (11) est fabriquée au moyen d'un moulage plastique, de forme sensiblement carrée et fixée sur un support de fixation (10) et il comprend une base support (11a) dont les côtés sont dotés d'une paroi verticale (11b-11d) où la base support (11a) incorpore au moyen d'un moulage intégré un guide tubulaire (21) qui se prolonge vers le haut pour permettre le passage de la tige de soupape (8) et pour permettre en même temps le maintien du ressort à torsion (22), un élément élastique (23) interagissant avec ledit levier de verrouillage (25) et deux languettes de retenue du ressort (14) pour le mécanisme de commande (4) qui s'étendent vers le bas depuis les côtés opposés, qui s'engagent dans les rainures correspondantes (15) de la plate-forme de soutien, dans lesquelles lesdites languettes de retenue (14) sont insérées au moyen d'un système d'assemblage par encliquetage, alors que la tige de soupape (8) est couplée auxdits mécanismes d'entraînement et de transmission (9,21-25).

2. Une vanne de secteur avec un dispositif de couplage (10-12) selon la revendication 1, où lesdites languettes de retenue (14) s'étendent à l'extérieur du contour de la plaque de base (11) à partir de deux de ses parois verticales (11 b,11 c) avec une portion courbée (14b) grâce à laquelle les languettes de retenue (14) exercent une force de retenue élastique après leur déformation et le support de fixation (10) présente une ouverture (20) dans deux bords opposés qui assure l'arrêt du parcours de pivotement de chaque languette de retenue (14) lorsqu'elles sont pressées vers le centre du mécanisme de commande (4), pour le retrait du mécanisme de commande (4).

3. Une vanne secteur avec un dispositif de couplage (10-12) selon la revendication 1, où ladite base support (11) comprend un ressort à bande (23) fabriqué à partir du même plastique utilisé pour l'une desdites parois verticales (11d), le ressort à bande (23) est situé face à ladite fente de fenêtre (19) sur le support de fixation (10) et se prolonge horizontalement de manière flexible dans ladite paroi verticale (11d) en contact avec le levier de verrouillage (25), afin que ce dernier reste comprimé sous l'effet du ressort à bande (23).

4. Une vanne secteur avec un dispositif de couplage (10-12) selon la revendication 1, où ladite base support (11) qui se trouve sur une plaque support sensiblement plate en bas (11a) est également dotées de deux rainures de guidage intégrées (28) pour l'insertion d'une carte de circuit imprimé électrique (Cl), deux parois verticales (29) qui forment une enceinte pour un micro interrupteur et une oreille (30) qui fait office de butée du ressort de rappel (22), adjacent audit guide tubulaire (21) pour la tige de vanne (8).

5. Une vanne secteur avec un dispositif de couplage (10-12) selon la revendication 1, où ladite plate-forme de soutien (12) fixée sur le corps de vanne (2) est un moulage plastique et possède sur deux côtés opposés un bord respectif relevé (13) qui est transversal au support de fixation (10), avec un canal (13) pour l'engagement depuis le haut de deux lèvres périphériques de bords périphériques (6a) du couvercle de l'enceinte et deux ouvertures rectangulaires (15) dans les deux autres côtés pour assurer le passage des languettes de retenue (14).
